# EUROPÄISCHE PATENTANMELDUNG

(11) **EP 3 967 913 A1**
(43) Veröffentlichungstag der Anmeldung: **16.03.2022**
(21) Anmeldenummer: 20195449.2
(22) Anmeldetag: 10.09.2020
(51) Int. Cl.: F16L 3/08, F16L 3/10, F16L 55/035, F16L 59/135

(54) **VERFAHREN ZUR HERSTELLUNG EINES ROHRTRÄGERS UND ROHRTRÄGER**

(71) Anmelder: Armacell Enterprise GmbH & Co. KG, 12529 Schönefeld OT Waltersdorf (DE)
(72) Erfinder: Kaiser, Sascha, 48329 Havixbeck (DE); Steiner, Arndt, 51381 Leverkusen (DE); Steinhorst, Thomas, 88260 Argenbühl (DE); Kuisle, Harald, 88167 Gestratz (DE)
(74) Vertreter: Vossius & Partner Patentanwälte Rechtsanwälte mbB

(57) **Zusammenfassung**

Die Erfindung betrifft einen Rohrträger (10) zur Aufhängung oder Abstützung einer isolierten Rohrleitung sowie ein Verfahren zur Herstellung eines solchen Rohrträgers. Der Rohrträger weist einen Hohlzylinder aus Weichschaum, mindestens zwei Tragelemente, die in den Hohlzylinder eingesetzt sind, und mindestens ein oder mehrere Lastverteilelemente (70), die im Bereich der Tragelemente am Hohlzylinder befestigt sind, auf. Der Hohlzylinder hat eine erste Stirnseite , eine zweite Stirnseite und eine sich zwischen der ersten Stirnseite und der zweiten Stirnseite erstreckende Zylinderwand, die sich entlang einer Längsachse erstreckt, wobei der Hohlzylinder entlang mindestens eines Schlitzes geöffnet ist, der sich von der ersten Stirnseite zur zweiten Stirnseite erstreckt, wobei die Zellen des Weichschaums entlang einer äußeren Mantelfläche des Hohlzylinders freiliegen. Zur Herstellung des Hohlzylinders werden ein oder mehrere Hohlzylinder-Rohlinge aus einer Platte geschnitten.

## Beschreibung

Die Erfindung betrifft ein verbessertes Verfahren zur Herstellung eines Rohrträgers sowie einen mit diesem Verfahren hergestellten Rohrträger. Der Rohrträger dient der Aufhängung oder Abstützung einer isolierten Rohrleitung, insbesondere einer Rohrleitung durch die kalte oder heiße Flüssigkeit geleitet wird.

Rohrträger sind grundsätzlich aus dem Stand der Technik bekannt. Isolierte Rohrträger werden beispielsweise unter dem Handelsnamen ArmaFix^{®} AF durch die Fa. Armacell International S.A., Capellen, Luxenburg vertrieben. Weitere Rohrträger sind beispielsweise aus DE 88 09 710 U1, EP 0 503 566 A1 und WO 2016/202775 A1 bekannt.

Isolierte Rohrträger werden üblicherweise zur Aufhängung streckenisolierter Rohre eingesetzt, bei denen das jeweilige Rohr häufig über einen beträchtlichen Teil bzw. im Wesentlichen über seine gesamte Länge mit einer schlauchförmigen Isolierung aus einem Weich- oder Hartschaum umgeben wird. Um die Isolierung des Rohrs auch im Bereich des Rohrträgers zu gewährleisten, wird bei Rohrträgern mit hohem thermischen Isolierungsgrad (z.B. mit hohem Dampfdiffusionswiderstand) ein Hohlzylinder aus Weichschaum in den Rohrträger eingesetzt, der im montierten Zustand das Rohr umgibt. Am Hohlzylinder wird, wie etwa in DE 88 09 710 U1 beschrieben, eine obere und eine untere Auflageschale angebracht. Der Hohlzylinder mit Auflageschalen wird dann über eine Rohrschelle an der Decke befestigt. Derartige Hohlzylinder aus dem Stand der Technik werden durch Stückelung eines Weichschaum-Schlauchs hergestellt.

Bekannt sind darüber hinaus Rohrträger, bei denen ein aus Hartschaum hergestellter Hohlzylinder Verwendung findet. Der Hartschaum-Hohlzylinder wird hierbei an seinen beiden Stirnseiten mit einer dünnen Schicht aus Weichschaum versehen, um bei Montage des Rohrträgers an die Streckenisolierung der Rohrleitung anzudocken. Solche Rohrträger sind allerdings im Hinblick auf den Rohrdurchmesser sehr wenig variabel und erlauben zudem nur geringere Traglasten.

Bei den bekannten Rohrträgern mit hohem thermischen Isolierungsgrad (z.B. mit hohem Dampfdiffusionswiderstand) ergibt sich der Nachteil, dass es teilweise zu einem Ablösen des Hohlzylinders von den Auflageschalen kommt. Eine Aufgabe der vorliegenden Erfindung ist es insofern, die Herstellung der bekannten Rohrträger zu verbessern, wobei insbesondere eine bessere Haftung des Hohlzylinders erreicht werden soll.

Zudem ist bei den bekannten Herstellungsverfahren nur ein geringer Automatisierungsgrad möglich. Eine weitere Aufgabe der Erfindung ist daher, einen höheren Automatisierungsgrad (oder eine Vollautomatisierung) der Fertigung zu ermöglichen.

Darüber hinaus ergibt sich durch die Lagerung verschiedenster Schläuche unterschiedlicher Dicken und Durchmesser zur Herstellung von Trägern für unterschiedliche Rohre ein hoher Platzbedarf. Eine weitere Aufgabe der vorliegenden Erfindung ist daher, den Lagerbedarf bei der Herstellung von Rohrträgern zu reduzieren.

Diese Aufgaben werden durch den Rohrträger und das Verfahren nach den unabhängigen Ansprüchen zumindest teilweise oder vollständig gelöst. Optionale Ausführungsformen sind den abhängigen Ansprüchen zu entnehmen.

Gemäß einem ersten Aspekt betrifft die Erfindung einen Rohrträger zur Aufhängung und/oder Abstützung einer isolierten Rohrleitung, wobei der Rohrträger einen Hohlzylinder aus, vorzugsweise geschlossenzelligem, Weichschaum, mindestens zwei Tragelemente, die in den Hohlzylinder eingesetzt sind, und mindestens eine oder mehrere Lastverteilelemente, die im Bereich der Tragelemente am Hohlzylinder befestigt sind, aufweist. Der Hohlzylinder hat eine erste Stirnseite, eine zweite Stirnseite und eine sich zwischen der ersten Stirnseite und der zweiten Stirnseite erstreckende Zylinderwand, die sich entlang einer Längsachse erstreckt, wobei der Hohlzylinder entlang mindestens eines Schlitzes geöffnet ist, der sich von der ersten Stirnseite zur zweiten Stirnseite erstreckt, wobei die Zellen des Weichschaums entlang einer äußeren Mantelfläche des Hohlzylinders vorzugsweise freiliegen. Diesbezüglich kann auch von entlang der äußeren Mantelfläche geöffneten Zellen gesprochen werden. Das eine oder die mehreren Lastverteilelemente können optional als Lastverteilschalen ausgebildet sein.

Der Hohlzylinder stellt vorzugsweise eine Durchgangsöffnung bereit, in die das zu tragende Rohr aufgenommen werden kann. Der Hohlzylinder kann entlang des Schlitzes geöffnet werden, um den Rohrträger auf das Rohr zu stecken.

Wie die Erfinder festgestellt haben, kann durch das freilegen der Zellen des, vorzugsweise geschlossenzelligen, Weichschaums entlang einer äußeren Mantelfläche des Hohlzylinders eine bessere Fixierung des mindestens einen Lastverteilelements auf dem Hohlzylinder erreicht werden. So wird das mindestens eine Lastverteilelement vorzugsweise auf den Hohlzylinder geklebt. Dabei wird angenommen, dass die freiliegende Zellstruktur entlang der äußeren Mantelfläche des Hohlzylinders eine bessere Verankerung des Klebers ermöglicht. Vorzugsweise ist das mindestens eine Lastverteilelement unmittelbar auf die freiliegenden und/oder geöffneten Zellen des Hohlzylinders geklebt.

Gemäß einem zweiten Aspekt betrifft die Erfindung ein Verfahren zur Herstellung eines Rohrträgers zur Aufhängung oder Abstützung einer isolierten Rohrleitung, vorzugsweise eines Rohrträgers gemäß des ersten Aspekts, wobei das Verfahren die folgenden Schritte umfasst:
- Bereitstellen einer oder mehrere Platten aus, vorzugsweise geschlossenzelligem, Weichschaum mit einer ersten Hauptfläche, einer gegenüberliegenden zweiten Hauptfläche und einer sich zwischen der ersten Hauptfläche und der zweiten Hauptfläche erstreckenden Plattendicke;
- Herstellen eines Hohlzylinders, wobei der Hohlzylinder eine erste Stirnseite, eine zweite Stirnseite und eine sich zwischen der ersten Stirnseite und der zweiten Stirnseite erstreckende Zylinderwand aufweist, die sich entlang einer Längsachse erstreckt, wobei der Hohlzylinder entlang mindestens eines Schlitzes geöffnet ist, der sich von der ersten Stirnseite zur zweiten Stirnseite erstreckt, wobei zur Herstellung des Hohlzylinders ein oder mehrere Hohlzylinder-Rohlinge aus der einen oder den mehreren Platten geschnitten werden;
- Einsetzen von mindestens zwei Tragelementen in den Hohlzylinder;
- Anbringen mindestens eines Lastverteilelements oder mehrerer Lastverteilelemente um den Hohlzylinder im Bereich der Tragelemente.

Der erfindungsgemäße Rohrträger wird vorzugsweise mit einer Rohrschelle versehen, die an dem mindestens einen oder an den mehreren Lastverteilelementen angreift. Diese Rohrschelle kann eine Aufhängung zur Befestigung an einer Decke oder eine Stütze zur Abstützung auf einem Boden aufweisen. Das erfindungsgemäße Verfahren kann insofern einen Schritt des Anbringens der Rohrschelle um die mindestens eine oder die mehreren Lastverteilelemente umfassen. Die Länge der Rohrschelle (gemessen in Richtung der Längsachse des Hohlzylinders) beträgt vorzugsweise mindestens 15 mm oder mindestens 20 mm. Vorzugsweise beträgt die Länge weniger als 35 mm, stärker bevorzugt weniger als 25 mm.

Der eine oder die mehreren Hohlzylinder-Rohlinge können unmittelbar in Form eines Hohlzylinders aus der einen oder den mehreren Platten geschnitten werden. Dies kann das Verfahren vereinfachen, weil ein separater Schritt des Zusammenfügens mehrerer Hohlzylinder-Rohlinge zu einem Hohlzylinder vermieden werden kann.

Der eine oder die mehreren Hohlzylinder-Rohlinge können jedoch auch als Hohlzylindersegmente aus der einen oder den mehreren Platten geschnitten werden. Mehrere dieser Hohlzylindersegmente (z.B. zwei Hohlzylindersegmente) können dann anschließend zu einem Hohlzylinder zusammengefügt werden. So können die Hohlzylindersegmente zur Herstellung eines Hohlzylinders z.B. mittels Klebetechnik aneinander geklebt werden. Indem die Hohlzylinder in Form von Hohlzylindersegmenten aus der einen oder den mehreren Platten geschnitten werden, kann der Verschnitt reduziert werden. Folglich können mehr Hohlzylinder-Rohlinge aus der jeweiligen Platte hergestellt werden.

Wie die Erfinder festgestellt haben, lassen sich durch das Schneiden der Hohlzylinder-Rohlinge aus einer Platte die Zellen des Weichschaums besonders vorteilhaft freilegen. Darüber hinaus lassen sich die Fertigungstoleranzen bei der Herstellung der Hohlzylinder-Rohlinge reduzieren, was ein gleichmäßigeres Anliegen des Hohlzylinders an dem mindestens einen bzw. den mehreren Lastverteilelementen fördert. Es wird angenommen, dass auch dies die Haftung der Lastverteilelemente am Hohlzylinder begünstigt und/oder einem späteren Ablösen vorbeugt. Die geringeren Fertigungstoleranzen vereinfachen zudem die Automatisierung nachfolgender Fertigungsschritte.

Unter einem Schneiden im Sinne der Erfindung ist insbesondere auch ein Aussägen, ein Ausstanzen und/oder ein Ausfräsen des mindestens einen Hohlzylinder-Rohlings aus der jeweiligen Platte zu verstehen. Vorzugsweise wird der mindestens eine Hohlzylinder-Rohling mittels einer Drahtschneidmaschine ausgeschnitten. Alternativ kann jedoch auch eine Wasserstrahlschneidmaschine, eine Fräsmaschine, ein Cutter (Schneidmesser) oder eine Bandsäge verwendet werden. Ein solches Schneiden, Ausstanzen und/oder Ausfräsen kann z.B. mittels CNC-Technik erfolgen.

Um den einen oder die mehreren Hohlzylinder-Rohlinge aus der einen oder den mehreren Platten zu schneiden, werden die eine oder die mehreren Platten vorzugsweise entlang ihrer jeweiligen ersten und/oder entlang ihrer jeweiligen zweiten Hauptfläche abgestützt. Als vorteilhaft hat sich erwiesen, die eine oder die mehreren Platten auf ihre jeweilige erste oder ihre jeweilige zweite Hauptfläche zu legen. Insbesondere können die eine oder die mehreren Platten horizontal angeordnet werden. Eine horizontale oder im wesentlichen horizontale Anordnung der Platte stellt sicher, dass die Hohlzylinder-Rohlinge auch nach dem Schneiden an Ort und Stelle in der Platte verbleiben. Die Rohlinge sind daher an einer vorbestimmten Position angeordnet und können nach dem Schneiden einfach entnommen werden, insbesondere auch automatisiert (etwa durch einen Roboter). Dem Fachmann wird jedoch verständlich sein, dass dies auch bei einer Anordnung erreicht werden kann, bei der ein bestimmter Winkel nicht überschritten wird, etwa einer Anordnung der ersten und/oder zweiten Hauptfläche der jeweiligen Platte in einem Winkel zur Horizontalen von weniger als 75°, weniger als 50° oder weniger als 30°.

Bei Abstützung der Platte entlang derjeweiligen ersten und/oder zweiten Hauptfläche stellt sich ein Schnitt durch die Platte mit den vorgenannten Schneidmaschinen unter Umständen als schwierig dar. Um dies zu vereinfachen, schlägt die Erfindung vor, die jeweilige Platte vorzugsweise entlang der jeweiligen Hauptfläche auf mindestens zwei Förderbändern abzustützen. Zwischen den mindestens zwei Förderbändern ist vorzugsweise ein Spalt ausgebildet. Die Schneidmaschine kann die Platte dann im Bereich dieses Spalts schneiden, wobei die Platte durch die Förderbänder hin und her bewegt werden kann, um die unterschiedlichen Bereiche der Platte zu bearbeiten.

Ein Schneidmittel der Schneidmaschine (etwa ein Draht, ein Wasserstrahl, ein Stanzwerkzeug, ein Fräser, ein Schneidmesser oder eine Bandsäge) wird vorzugsweise durch den Spalt zwischen den mindestens zwei Förderbändern geführt. Das Schneidmittel wird vorzugsweise so geführt, dass es erst durch die jeweilige Platte schneidet und dann durch den Spalt verläuft. Dies kann verhindern, dass die geschnittenen Hohlzylinder-Rohlinge durch das Schneidmittel unbeabsichtigt aus der Platte gezogen werden.

In anderen Worten wird das Schneidmittel zur Ausführung des Schnitts durch die Platte vorzugsweise entgegen einer Richtung bewegt, die von der Hauptfläche, entlang der die jeweilige Platte abgestützt ist (z.B. auf den mindestens zwei Förderbändern), zur gegenüberliegenden Hauptfläche weist.

Bei horizontaler oder im Wesentlichen horizontaler Anordnung der einen oder der mehreren Platten wird die Platte bzw. werden die Platten vorzugsweise mittels einer Schneidmaschine geschnitten, die einen Schnitt vertikal oder im Wesentlichen vertikal durch die Platte ausführt. Das Schneidmittel verläuft somit zur Ausführung eines Schnitts vertikal oder im Wesentlichen vertikal, stärker bevorzugt vertikal oder im Wesentlichen vertikal nach unten. So kann der Draht der Drahtschneidmaschine z.B. so gedreht werden, dass er zum Schneiden abwärts durch die Platte bewegt wird, insbesondere vertikal nach unten. Entsprechendes gilt für das Band der Bandsäge, das Wasser der Wasserstrahlschneidmaschine, das Stanzwerkzeug oder den Fräser. Bei diesen Verfahren kann der Hohlzylinder mit hoher Qualität (deutlich höher als bei einem Rohr) mit einem runden Querschnitt hergestellt werden. Alternativ kann der Hohlzylinder jedoch auch mit einem nicht-runden Querschnitt aus der Platte geschnitten werden, z.B. mit einem ovalen, quadratischen oder rechteckigen Querschnitt. Je nach Form des Rohrs und einer optionalen Rohrschelle kann hierdurch die Abdichtung verbessert und/oder die Krafteinleitung optimiert werden. Der Hohlzylinder kann insofern auch als Prisma mit einem Durchgangsloch, das sich von der ersten zur gegenüberliegenden zweiten Stirnfläche des Prismas erstreckt, betrachtet werden.

Die Platte weist eine Plattenbreite und eine Plattentiefe auf, wobei die Plattendicke vorzugsweise kleiner als die Plattenbreite und die Plattentiefe ist. Der Hohlzylinder wird vorzugsweise so aus der Platte geschnitten, dass dessen Längsachse parallel zur Plattendicke ist.

Beim erfindungsgemäßen Verfahren wird aus einer Platte vorzugsweise eine Vielzahl von Hohlzylindern bzw. eine Vielzahl von Hohlzylinder-Rohlingen geschnitten. Die Plattendicke beträgt hierbei vorzugsweise mindestens 0,5 cm, mindestens 1 cm, mindestens 2 cm, mindestens 4 cm oder mindestens 5 cm. Bezogen auf den Hohlzylinder ist dieser somit in Richtung der Längsachse vorzugsweise mindestens 2 cm, mindestens 4 cm oder mindestens 5 cm lang. Die Plattendicke beträgt vorzugsweise höchstens 20 cm, höchstens 15 cm oder höchstens 10 cm. Bezogen auf den Hohlzylinder ist dieser somit in Richtung der Längsachse vorzugsweise höchstens 20 cm, höchstens 15 cm oder höchstens 10 cm lang.

Um das Schneiden der Hohlzylinder aus derartigen Weichschaum-Platten (insbesondere derartigen Weichschaumplatten mit begrenzter Plattendicke) zu vereinfachen, kann die Platte vor und/oder bei Herstellung des Hohlzylinder-Rohlings temperiert (insbesondere gekühlt) werden. So kann die Platte z.B. in einer Kühlkammer gelagert oder in einer Kühlkammer bearbeitet werden. Bei Verwendung einer Drahtschneidmaschine kann diese z.B. in einer solchen Kühlkammer angeordnet sein oder über eine solche Kühlkammer verfügen.

Vorzugsweise werden die eine oder die mehreren Platten auf eine Temperatur unter 25 °C, stärker bevorzugt auf eine Temperatur unter 15 °C temperiert. Die Temperatur liegt vorzugsweise über -50 °C, stärker bevorzugt über -10 °C.

Alternativ oder zusätzlich kann die Platte, z.B. zur Versteifung, in Richtung der Plattendicke aus mehreren Lagen gebildet sein. Die einzelnen Lagen können mittels Klebetechnik miteinander verbunden sein. Die verschiedenen Lagen sind vorzugsweise jeweils aus einem Weichschaum ausgebildet, vorzugsweise aus einem geschlossenzelligen Weichschaum, insbesondere einer Weichschaumplatte. Dabei kann für mehrere oder alle Lagen derselbe Weichschaum verwendet werden. Alternativ können die Lagen aus verschiedenen Materialien mit unterschiedlichen Wärmeleitkoeffizienten und/oder unterschiedlichen Schallabsorptionskoeffizienten ausgebildet sein, insbesondere aus verschiedenen geschlossenzelligen Weichschäumen.

Die Dicke von Weichschaumplatten kann unter Umständen einer relativ hohen Toleranz unterliegen, was sich beim erfindungsgemäßen Verfahren in einer uneinheitlichen Länge der Hohlzylinder-Rohlinge widerspiegeln könnte. Zur Verringerung der Längentoleranz der Rohlinge und/oder Bestimmung von deren Länge kann die Dicke der mehrlagigen, verklebten Platte nach Verkleben der einzelnen Lagen (insbesondere nach Verkleben der einzelnen Weichschaumplatten) eingestellt werden. Hierfür wird die mehrlagig Platte vorzugsweise quer zur Dickenrichtung (also parallel zur ersten und/oder zweiten Hauptfläche) geschnitten, z.B. mittels einer Drahtschneidmaschine, einer Wasserstrahlschneidmaschine oder einer Bandsäge.

Der hergestellte Hohlzylinder kann somit in Richtung der Längsachse aus mehreren Lagen gebildet sein, wobei die einzelnen Lagen vorzugsweise hohlzylinderförmig sind und/oder dem Querschnitt des Hohlzylinders entsprechen. Diese Lagen können mittels Klebetechnik miteinander verbunden sein. Die Lagen können aus dem gleichen Weichschaum bestehen (insbesondere dem gleichen geschlossenzelligen Weichschaum) oder aber unterschiedliche Wärmeleitkoeffizienten und/oder Schallabsorptionskoeffizienten haben.

Beim Schneiden des Hohlzylinder-Rohlings aus einer Platte können die Zellen des Weichschaums auch entlang einer inneren Mantelfläche der Zylinderwand freiliegen und/oder geöffnet sein.

Der Hohlzylinder-Rohling wird vorzugsweise so ausgeschnitten, dass die erste Hauptfläche der Platte die erste Stirnseite und/oder eine zweite Hauptfläche der Platte die zweiten Stirnseite bildet. Die erste Hauptfläche und/oder die zweite Hauptfläche sind optional mit einer Haut ausgebildet, welche die jeweilige Hauptfläche zumindest abschnittsweise oder vollständig bedeckt. Die Zellstruktur des Weichschaums tritt entlang der ersten Hauptfläche und/oder entlang der zweiten Hauptfläche daher optional nicht offen zutage. Die erste Stirnseite und/oder die zweite Stirnseite weisen dann eine Außenhaut auf. Die Zellen des, vorzugsweise geschlossenzelligen, Weichschaums liegen in diesem Fall entlang der ersten Stirnseite und/oder entlang der zweiten Stirnseite nicht frei. In diesem Fall tritt die Zellstruktur des Weichschaums im Bereich der ersten und/oder zweiten Stirnfläche vorzugsweise nicht offen zutage.

Der Schlitz des Hohlzylinders verläuft vorzugsweise parallel zur Längsachse und/oder von der inneren Mantelfläche bis zur äußeren Mantelfläche. Der Schlitz kann während des Schneidens des Hohlzylinder-Rohlings aus der Platte eingebracht werden, was einen Herstellungsschritt reduziert. Alternativ kann der Schlitz auch in einem nachträglichen Schritt eingebracht werden.

Um die Befestigung des Rohrträgers am Rohr zu vereinfachen, ist im Bereich des Schlitzes vorzugsweise ein Haftkleber vorgesehen, z.B. in Form eines doppelseitigen Klebebands. Der Hohlzylinder kann so durch Zusammendrücken der entlang des Schlitzes getrennten Flächen der Zylinderwand dampfdicht verschlossen werden. Um den Haftkleber vor der endgültigen Montage zu schützen, ist dieser vorzugsweise mit einer abziehbaren Folie versehen. Die abziehbare Folie weist vorzugsweise eine über die Zylinderwand und/oder über mindestens eine der Stirnseiten vorstehende Lasche auf, die durch einen Monteur mit einer Hand ergriffen werden kann, um die Folie abzuziehen (insbesondere werkzeuglos) und den Haftkleber bzw. die Klebefläche des doppelseitigen Klebebands freizulegen.

Die Durchgangsöffnung des Hohlzylinders verläuft vorzugswiese parallel zur Längsachse und/oder von der ersten Stirnfläche zur zweiten Stirnfläche. Die Durchgangsöffnung kann während des Schneidens des Hohlzylinder-Rohlings aus der Platte eingebracht werden.

Alternativ kann die Durchgangsöffnung auch in einem nachträglichen Schritt eingebracht werden.

Vorzugsweise erstreckt sich nicht mehr als ein Schlitz von der ersten Stirnseite zur zweiten Stirnseite und von der inneren Mantelfläche zur äußeren Mantelfläche. Der Hohlzylinder ist dann in Umfangsrichtung aus einem einzelnen einheitlichen Segment ausgebildet. Je nach Anwendungsbereich können aber auch mehrere Schlitze vorgesehen sein, sodass der Hohlzylinder in Umfangsrichtung mehrere getrennte Segmente aufweist, die vorzugsweise miteinander verklebt oder miteinander verklebbar sind. So kann der Hohlzylinder beispielsweise in Umfangsrichtung aus zwei getrennten Segmenten bestehen.

Die Tragelemente sind vorzugsweise aus einem Material ausgebildet, das härter als der Weichschaum ist. Vorzugsweise wird hierfür ein Hartschaum verwendet. Die Tragelemente können insofern auch als Hartschaum-Segmente bezeichnet werden. Statt einem Hartschaum können jedoch auch andere Materialien zum Einsatz kommen, die eine ausreichende thermische Isolierung und Tragfähigkeit erreichen, z.B. Kork.

Die Tragelemente sind vorzugsweise als Ringsegmente ausgebildet.

Der Hartschaum der Hartschaum-Segmente ist härter als der Weichschaum des Hohlzylinders. Beim Weichschaum handelt es sich vorzugsweise um Kautschuk.

Der Hartschaum kann ein PUR oder PET Hartschaum sein.

Vorzugsweise hat der Hartschaum eine Dichte von mindestens 100 kg/m³, mindestens 110 kg/m³, mindestens 120 kg/m³, mindestens 150 kg/m³ oder mindestens 200 kg/m³. Derartige Dichten sind insbesondere in Verbindung mit einem PET Hartschaum von Vorteil.

Die Tragelemente werden vorzugsweise jeweils in ein im Hohlzylinder ausgebildetes Fenster eingesetzt. Das jeweilige Fenster erstreckt sich vorzugsweise durch die Zylinderwand hindurch, vorzugsweise quer zur Längsrichtung. In anderen Worten erstreckt sich das Fenster vorzugsweise von der inneren Mantelfläche bis zur äußeren Mantelfläche.

Das jeweilige Fenster kann als eine ringsegmentförmige Öffnung ausgebildet sein.

Das mindestens eine Lastverteilelement oder die mehreren Lastverteilelemente sind vorzugsweise jeweils kreissegmentförmig ausgebildet. Dabei kann sich das jeweilige Lastverteilelement um einen Mittelpunktswinkel von mindestens 120°, mindestens 150° oder mindestens 170° erstrecken. Die geringere Fertigungstoleranz ist hilfreich, um über diese Winkel hinweg eine gleichmäßige Anlage des Hohlzylinders an dem Lastverteilelement zu erreichen, ohne dass der Hohlzylinder hierfür (unter der Einbringung von Spannungen) verformt werden muss.

Der Rohrträger verfügt vorzugsweise über zwei kreissegmentförmige Lastverteilelemente , die auf die äußere Mantelfläche des Hohlzylinders aufgebracht sind, insbesondere aufgeklebt (vorzugsweise direkt auf die freiliegende Zellstruktur). Dabei ist vorzugsweise jeweils ein Lastverteilelement einem jeweiligen Tragelement zugeordnet, sodass die in das Tragelement eingeleitete Kraft über die Kraftverteilschale auf eine Rohrschelle übertragen werden kann. Das mindestens eine oder die mehreren Lastverteilelemente können aus Kunststoff oder Blech hergestellt sein. Insofern können die mindestens eine oder die mehreren Lastverteilelemente im Rahmen der Erfindung auch jeweils als ein Krafverteilblech bezeichnet werden.

Das oder die Lastverteilelemente können schalenförmig ausgebildet sein und insofern auch als Kraftverteilschale/n bezeichnet werden.

Eine äußere Oberfläche des mindestens einen Lastverteilelements kann strukturiert oder aufgeraut sein. Insbesondere kann auf der äußeren Oberfläche ein Strukturlack aufgebracht sein. So kann die äußere Oberfläche eine Rauheit Ra von mindestens 30 µm, mindestens 50 µm oder mindestens 70 µm aufweisen. Hierdurch können Lichtreflektionen an dem jeweiligen Lastverteilelement minimiert werden, die nach Montage von Rohrträgern aus dem Stand der Technik teilweise als störend empfunden werden. Eine radial äußere Oberfläche des Lastverteilelements bzw. der Lastverteilelemente ist vorzugsweise schwarz. Wie der Fachmann erkennen wird, ist eine solche äußere Oberfläche in Verbindung mit den vorstehend beschriebenen Merkmalen und Verfahren vorteilhaft. Eine solche strukturierte Oberfläche am Lastverteilelement oder den Lastverteilelementen eines Rohrträgers bietet jedoch auch unabhängig von den vorstehend beschriebenen Aspekten Vorteile, weshalb hierin auch ein eigenständiger Aspekt der Erfindung zu sehen ist, der auch unabhängig von anderen Merkmalen, die vorstehend beschrieben werden (insbesondere auch unabhängig vom Freiliegen der Zellen des Weichschaums entlang der äußeren Mantelfläche des Hohlzylinders und unabhängig vom erfindungsgemäßen Verfahren), implementiert werden kann.

Bei herkömmlichen Rohrträgern ergibt sich als weiteres Problem, dass die Rohrschelle unter Umständen nicht mittig in Bezug auf die Tragelemente montiert wird. Da das Tragelement über die Rohrschelle hervorsteht, kann dies nach Montage zu einem beständigen Kippmoment zwischen der Schelle und dem übrigen Rohrträger führen.

Um das Risiko einer falschen Montage zu verringern, schlägt die vorliegende Erfindung ferner vor, die Länge des Hohlzylinders (gemessen in Richtung der Längsachse) in Bezug auf die Länge der Rohrschelle (gemessen in Richtung der Längsachse des Hohlzylinders) und/oder die Länge des Tragelements (gemessen in Richtung der Längsachse des Hohlzylinders) in Bezug auf die Länge des Hohlzylinders und/oder in Bezug auf die Länge des Rohrträgers zu reduzieren. Wie der Fachmann auch in diesem Zusammenhang erkennen wird, ist eine solche Dimensionierung in Verbindung mit den vorstehend beschriebenen Merkmalen und Verfahren vorteilhaft. Eine solche Dimensionierung bietet jedoch auch unabhängig von den vorstehend beschriebenen Aspekten Vorteile, weshalb hierin auch ein eigenständiger Aspekt der Erfindung zu sehen ist, der auch unabhängig von anderen Merkmalen, die vorstehend beschrieben werden (insbesondere auch unabhängig vom Freiliegen der Zellen des Weichschaums entlang der äußeren Mantelfläche des Hohlzylinders und unabhängig vom erfindungsgemäßen Verfahren), implementiert werden kann.

Die Länge des Hohlzylinders beträgt vorzugsweise weniger als 3 Mal, vorzugsweise weniger als 2 Mal die Länge der Rohrschelle.

Die Länge des Tragelements beträgt vorzugsweise weniger als 1/2, weniger als 4/10 oder weniger als 1/3 der Länge des Hohlzylinders und/oder der Länge des Rohrträgers. Die Länge des Tragelements beträgt vorzugsweise weniger als 1,5 Mal, vorzugsweise weniger als 1 Mal die Länge der Rohrschelle.

Eine derartige Dimensionierung der Tragelemente und/oder des Rohrträgers lässt sich z.B. durch die Herstellung der Tragelemente aus PET Schaum mit hoher Dichte erreichen.

Um ein Verrutschen der Rohrschelle gegenüber dem mindestens einen Lastverteilelement in Richtung der Längsachse zu begrenzen und weiter eine korrekte Montage der Rohrschelle zu fördern, ist entlang einer radial äußeren Oberfläche mindestens eines Lastverteilelements vorzugsweise mindestens eine Abrutschsicherung vorgesehen, die vorzugsweise als mindestens ein Anschlag ausgebildet ist. Vorzugsweise sind zwei Anschläge vorgesehen, die ein Verrutschen entlang der Längsachse in beiden Richtungen begrenzen. Ein jeweiliger Anschlag wird vorzugsweise durch eine oder mehrere Noppen oder Vorsprünge gebildet, die entlang der äußeren Oberfläche des jeweiligen Lastverteilelements vorgesehen sind und von dieser nach außen abstehen. Die Noppen sind vorzugsweise vom Rand des Lastverteilelements beabstandet. Alternativ können an dem mindestens einen Lastverteilelement bzw. an einem jeweiligen Lastverteilelement jedoch auch ein oder mehrere Sicken, Prägungen oder Nuten als jeweilige Anschläge vorgesehen sein, wenn eine für die Anwendung akzeptable Isolation erreicht wird. Wie der Fachmann auch in diesem Zusammenhang erkennen wird, ist eine solche Abrutschsicherung in Verbindung mit den vorstehend beschriebenen Merkmalen und Verfahren vorteilhaft. Die Abrutschsicherung bietet jedoch auch unabhängig von den vorstehend beschriebenen Aspekten Vorteile, weshalb hierin auch ein eigenständiger Aspekt der Erfindung zu sehen ist, der auch unabhängig von anderen Merkmalen, die vorstehend beschrieben werden (insbesondere auch unabhängig vom Freiliegen der Zellen des Weichschaums entlang der äußeren Mantelfläche des Hohlzylinders und unabhängig vom erfindungsgemäßen Verfahren), implementiert werden kann.

Beim erfindungsgemäßen Verfahren können aus einer einzelnen Platte oder mehreren Platten Hohlzylinder-Rohlinge verschiedener Innendurchmesser und/oder verschiedener Außendurchmesser geschnitten werden.

Gemäß einem weiteren Aspekt bezieht sich die Erfindung auf einen Rohrträger zur Aufhängung oder Abstützung einer isolierten Rohrleitung, der nach dem erfindungsgemäßen Verfahren hergestellt ist.

Gemäß einem weiteren Aspekt bezieht sich die Erfindung auf eine Rohrleitung mit einem erfindungsgemäßen Rohrträger.

Bevorzugte Ausführungsformen der Erfindung werden nachfolgend unter Bezugnahme auf die Zeichnungen beispielhaft beschrieben. Es handelt sich dabei lediglich um schematische Darstellungen, die häufig zur Verdeutlichung bestimmter Aspekte andere (optionale) Strukturen nicht darstellen oder aber auch verschiedene optionale, miteinander einhergehende Aspekte in einer Darstellung berücksichtigen. Gleiche Bezugszeichen weisen in diesem Zusammenhang auf äquivalente, ähnliche, vergleichbare oder gleiche Bauteile in den dargestellten Ausführungsformen hin.

Die gezeigten Ausführungsformen können innerhalb des Schutzumfangs der Ansprüche in vielerlei Hinsicht verändert werden. Die Offenbarung der Figuren soll den Schutzumfang der Erfindung daher nicht beschränken. Dabei ist zu beachten, dass die Merkmale der obengenannten Ausführungsformen in einer einzigen Ausführungsform kombiniert werden können. Ausführungsformen der Erfindung können daher je nach Ausgestaltung alle oder nur einige der obengenannten Merkmale aufweisen. Es zeigen:
- **Fig. 1**: eine schematische Darstellung eines erfindungsgemäßen Verfahrens;
- **Fig. 2**: eine schematische, perspektivische Darstellung einer Platte und der aus der Platte im Rahmen des Verfahrens nach Fig. 1 auszuschneidenden Hohlzylinder-Rohlinge;
- **Fig. 3**: eine schematische, perspektivische Darstellung eines Hohlzylinders für einen Rohrträger gemäß der vorliegenden Erfindung;
- **Fig. 4**: eine schematische, perspektivische Darstellung eines erfindungsgemäßen Rohrträgers mit dem Hohlzylinder von Fig. 3;
- **Fig. 5**: ein schematischer Schnitt durch den Rohrträger von Fig. 4;
- **Fig. 6**: eine schematische, perspektivische Darstellung eines Hohlzylinders für einen Rohrträger gemäß einer Variante der vorliegenden Erfindung;
- **Fig. 7**: eine schematische, perspektivische Darstellung eines Blocks aus mehreren Platten.

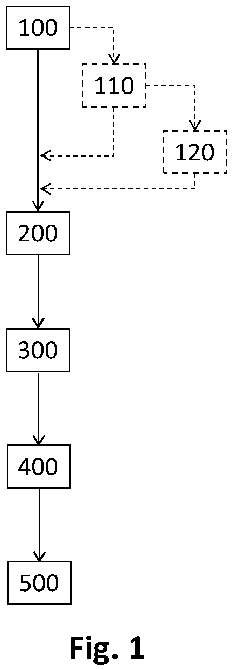

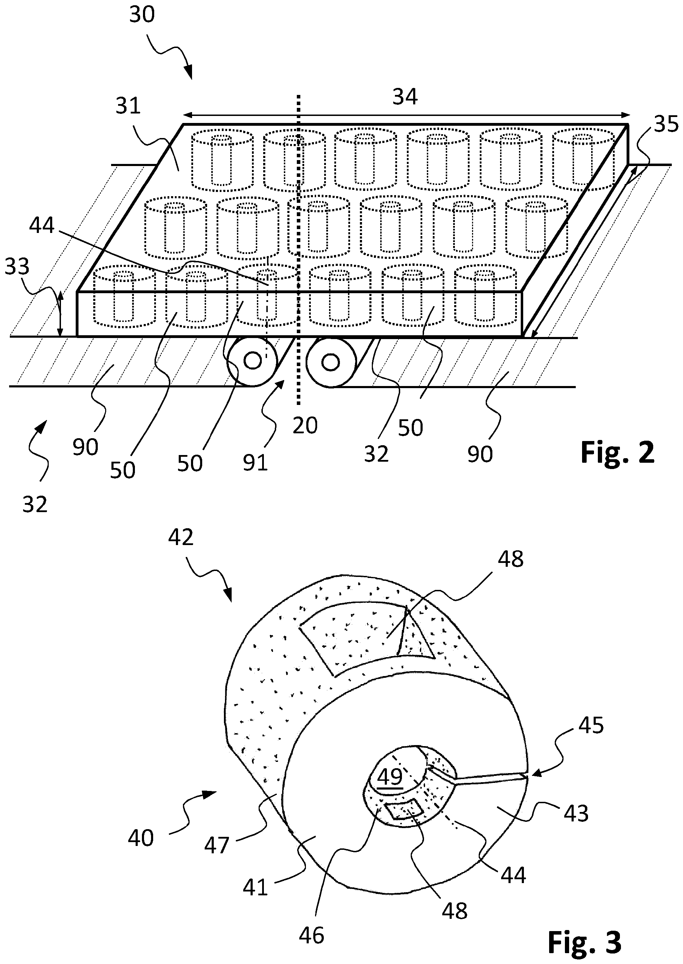

Fig. 1 zeigt schematisch ein erfindungsgemäßes Verfahren zur Herstellung eines Rohrträgers. Das Verfahren umfasst einen ersten Schritt 100 des Bereitstellens einer Platte aus geschlossenzelligem Weichschaum 30 (siehe Fig. 2), wobei die Platte eine erste Hauptfläche 31, eine gegenüberliegende zweite Hauptfläche 32 und eine sich zwischen der ersten Hauptfläche 31 und der zweiten Hauptfläche 32 erstreckende Plattendicke 33 hat. Die Plattendicke 33 ist dabei kleiner als eine Plattenbreite 34 und eine Plattentiefe 35 der Platte 30.

In einem zweiten Schritt 200 wird eine Vielzahl von Hohlzylinder-Rohlingen 50 aus der Platte hergestellt, insbesondere aus der Platte geschnitten (z.B. mindestens 10, mindestens 20 oder mindestens 50 Hohlzylinder-Rohlinge 50). Für eine effiziente Herstellung bietet sich hierbei insbesondere das Ausschneiden mittels einer Drahtschneidmaschine, einer Bandsäge oder ein Ausstanzen der Hohlzylinder-Rohlinge 50 an. Der Draht einer solchen Drahtschneidmaschine verläuft in der Regel vertikal oder horizontal. Eine vertikale Drahtführung wird im Rahmen der Erfindung bevorzugt, weil die Rohlinge 50 dadurch beim Schneiden in der Platte 30 bleiben und anschließend automatisch entnommen werden können. In Fig. 2 ist mit dem Bezugszeichen 20 der Draht der Drahtschneidmaschine als gestrichelte Linie angedeutet. Darüber hinaus sind zwei Förderbänder 90 gezeigt, auf denen die Platte 30 aufliegt, in Fig. 2 beispielhaft entlang der zweiten Hauptfläche 32. Zwischen den Förderbändern 90 ist ein Spalt 91 vorgesehen, durch den der Draht 20 verläuft. Um im Wesentlichen aus dem gesamten Material der Platte 30 Hohlzylinder-Rohlinge 40 schneiden zu können, wird die Platte 30 vorzugsweise auf den Förderbändern 90 hin und her bewegt. Der Draht 20 verläuft aus Richtung der ersten Hauptfläche 31 kommend in Richtung der zweiten Hauptfläche 32 auf die Platte zu und durch diese hindurch. Die Hohlzylinder-Rohlinge 40 werden so beim Schneiden gegen die Förderbänder 90 gedrückt. Die Hohlzylinder-Rohlinge 40 verbleiben dadurch an vorbestimmten Stellen in der Platte 30 und können während oder nach Beendigung des Schneidvorgangs automatisiert aus der Platte 30 entnommen werden, z.B. mittels eines Roboters (z.B. mit einem Greifer oder Sauger).

Vor dem Schneiden in Schritt 200 können optional mehrere Platten 30 aus geschlossenzelligem Weichschaum miteinander verklebt werden. Dies wird durch den in Fig. 1 gestrichelt dargestellten Schritt 110 gezeigt. So wird vorzugsweise eine mehrlagige Platte hergestellt, die eine gewünschte Stabilität und/oder Dicke besitzt. Aus dieser mehrlagigen Platte können dann im Schritt 200 unmittelbar Hohlzylinder-Rohlinge 50 ausgeschnitten werden. Zur genaueren Einstellung der Dicke der mehrlagigen Platte kann die Platte jedoch in einem vorangehenden, optionalen Schritt 120 auch zuerst auf eine gewünschte Gesamtdicke zugeschnitten werden, z.B. mittels einer Drahtschneidmaschine oder einer Bandsäge.

Die Hohlzylinder-Rohlinge 50 werden so aus der Platte 30 geschnitten, dass eine Längsachse 44 des jeweiligen Hohlzylinders parallel zur Plattendicke 33 ist. So kann die Vielzahl von Hohlzylinder-Rohlingen 50 unter minimalem Materialaufwand herstellt werden. Die Plattendicke 33 beträgt vorzugsweise mindestens 0,5 cm, mindestens 1 cm, mindestens 2 cm, mindestens 4 cm oder mindestens 5 cm, sodass der jeweilige Hohlzylinder-Rohling vorzugsweise eine Länge entlang der Längsachse von mindestens 0,5 cm, mindestens 1 cm, mindestens 2 cm, mindestens 4 cm oder mindestens 5 cm hat. Da der Rohrträger nur eine begrenzte Länge hat und eine nachträgliche Stückelung der Hohlzylinder-Rohlinge 50 in einem separaten Bearbeitungsschritt vorzugsweise vermieden wird, hat die Platte 30 vorzugsweise eine Dicke 33 von höchstens 20 cm oder höchstens 10cm.

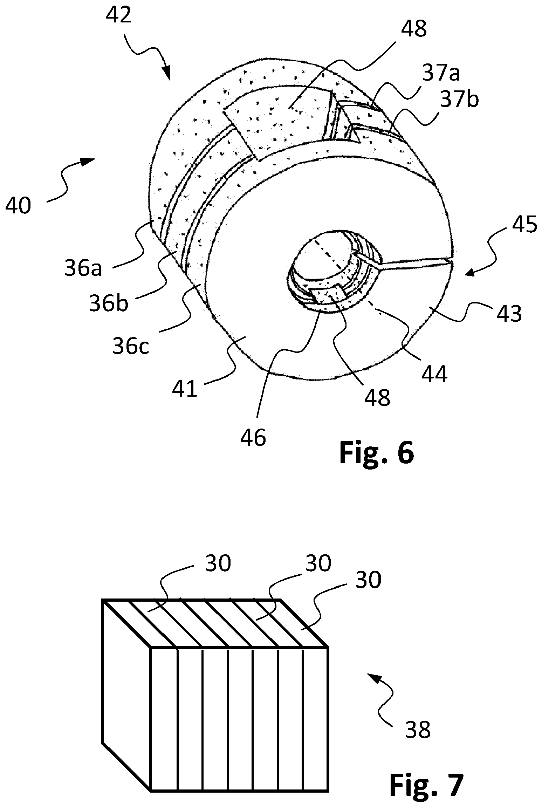

Um die Herstellung der Hohlzylinder-Rohlinge 50 aus der Platte 30 zu vereinfachen, kann die Platte 30 gekühlt werden. Darüber hinaus können mehrere Platten 30, wie bereits oben zu Schritt 110 besprochen, vor dem Schneiden der Hohlzylinder-Rohlinge 50 zu einem Block 38 zusammengefügt werden (wobei die Platten 30 entlang ihrer Hauptflächen miteinander verbunden und/oder verklebt sind) und/oder jeweilige Platten 30 zur Versteifung mehrlagig hergestellt sein. Ein solcher Block 38 ist schematisch in Fig. 7 dargestellt.

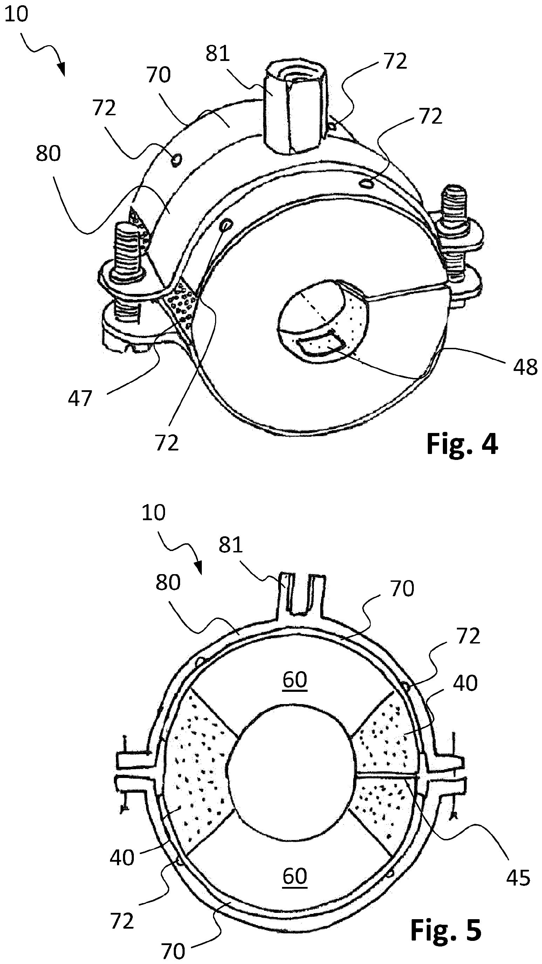

In einem dritten Schritt 300 des Verfahrens werden mindestens 2 Tragelemente 60 (siehe Fig. 4 und 5) in den Hohlzylinder eingesetzt. Zu diesem Zweck kann der Hohlzylinder-Rohling 50 mit entsprechenden Aussparungen versehen werden. Bei diesen Aussparungen kann es sich insbesondere um Fenster 48 (siehe Fig. 3) handeln, in deren Bereich der Hohlzylinder-Rohling 50 ausgeschnitten wurde. Wie in Fig. 3 gezeigt, können sich die Fenster 48 hierbei von einer inneren Mantelfläche 46 bis zu einer äußeren Mantelfläche 47 durch den Hohlzylinder 40 erstrecken.

Die Tragelemente 60 sind vorzugsweise aus einem Hartschaum ausgebildet, durch den auch im Bereich der Tragelemente 60 eine relativ gute Isolierung erreicht wird.

In einem nachfolgenden Schritt 400 kann mindestens ein Lastverteilelement 70 (siehe Fig. 4 und 5) an dem Hohlzylinder 40 angebracht werden, insbesondere im Bereich der Tragelemente 60. Desweiteren kann in einem nachfolgenden Schritt 500 mindestens eine Rohrschelle 80 um das mindestens eine Lastverteilelement 70 angebracht werden.

Wie ferner in Fig. 3 gezeigt, weist ein so hergestellter Hohlzylinder 40 vorzugsweise eine erste Stirnseite 41 und eine zweite Stirnseite 42 auf. Zwischen der ersten Stirnseite 41 und der zweiten Stirnseite 42 erstreckt sich eine Zylinderwand 43 des Hohlzylinders 40, die entlang mindestens eines Schlitzes 45 durchbrochen ist. Der Schlitz 45 erstreckt sich dabei von der ersten Stirnfläche 41 bis zur zweiten Stirnfläche 42 und von der inneren Mantelfläche 46 bis zur äußeren Mantelfläche 47. Damit erlaubt der Schlitz 45 ein Rohr (nicht dargestellt) in den Hohlzylinder einzuführen. Das Rohr wird dann in einer Durchgangsöffnung 49 des Hohlzylinders 40 aufgenommen. Der Schlitz 45 wird vorzugsweise bereits beim Schneiden in Schritt 200 eingebracht.

Wie darüber hinaus in Fig. 3 und 4 angedeutet ist, ist bei einem so hergestellten Hohlzylinder 40 die Zellstruktur des geschlossenzelligen Weichschaums entlang der inneren Mantelfläche 46 und entlang der äußeren Mantelfläche 47 freigelegt. Im Bereich der ersten Stirnseite 41 und im Bereich der zweiten Stirnseite 42 kann der Hohlzylinder dagegen eine Haut aufweisen, sodass die Zellstruktur an der ersten Stirnseite 41 und/oder an der zweiten Stirnseite 42 nicht freiliegt.

Die Erfinder haben festgestellt, dass ein so hergestellter Hohlzylinder eine bessere Haftung daran angebrachter Lastverteilelemente 70 ermöglicht. Es wird angenommen, dass dies zumindest teilweise durch das Freilegen der geschlossenzelligen Zellstruktur des Weichschaums im Bereich der äußeren Mantelfläche 47 erreicht wird, weil durch die verwendeten Haftmittel (z.B. ein Klebstoff) so eine bessere Verankerung im Weichschaum möglich ist. Darüber hinaus wird mit dem beschriebenen Verfahren eine höhere Formtreue der äußeren Mantelfläche 47 erreicht. Es wird angenommen, dass auch hierdurch eine bessere Haftung zumindest teilweise erreicht wird, weil der Hohlzylinder 40 gleichmäßig an dem Lastverteilelement 70 befestigt werden kann, ohne dass durch eine Verformung des Hohlzylinders 40 Spannungen eingebracht werden.

Das mindestens eine Lastverteilelement 70, wobei vorzugsweise zwei Lastverteilelemente 70 verwendet werden, weist bei der beispielhaft dargestellten Ausführungsform (siehe Fig. 4) einen ersten Anschlag auf, um ein Verrutschen der Rohrschelle 80 entlang der Längsachse 44 nach vorne zu verhindern, und einen zweiten Anschlag, um ein Verrutschen der Rohrschelle 80 entlang der Längsachse 44 nach hinten zu verhindern. Der erste Anschlag wird dabei durch ein oder mehrere Noppen 72 (z.B. zwei Noppen 72) bereitgestellt, die entlang eines vorderen Endbereichs des jeweiligen Lastverteilelements 70 ausgebildet sind. Der zweite Anschlag wird entsprechend durch ein oder mehrere Noppen (z.B. zwei weitere Noppen) bereitgestellt, die an einem hinteren Endbereich des jeweiligen Lastverteilelements 70 ausgebildet sind. Wie der Fachmann erkennen wird, genügt es, eines der beiden Lastverteilelemente 70 mit solchen Anschlägen zu versehen. Vorzugsweise verfügt jedoch jedes der vorhandenen Lastverteilelemente 70 über entsprechende Noppen 72, wobei bei der beispielhaften Ausführungsform von Fig. 4 und 5 (siehe hierzu insbesondere Fig. 5) zwei Lastverteilelemente 70 verwendet werden. Die Rohrschelle 80 verfügt über eine Aufhängung 81 zur Befestigung des Rohrträgers 10 an einer Decke. Alternativ oder zusätzlich kann jedoch auch eine Abstützung vorgesehen sein (nicht gezeigt).

Wie z.B. in der Schnittdarstellung gemäß Fig. 5 zu erkennen ist, können die Tragelemente 60 in Form von Ringsegmenten ausgebildet sein, die in entsprechende, ringsegmentförmige Fenster 48 des Hohlzylinders 40 eingesetzt sind.

Fig. 6 zeigt eine weitere Variante eines Hohlzylinders 40 für einen erfindungsgemäßen Rohrträger, wobei gleiche Elemente mit gleichen Bezugszeichen gekennzeichnet sind.

Bei dieser Variante wird der Hohlzylinder 40 aus einer mehrlagigen Platte 30 geschnitten, wobei beispielhaft ein Hohlzylinder 40 mit drei Lagen 36a, 36b, 36c gezeigt ist (es können jedoch auch zwei, vier oder mehr Lagen Verwendung finden). Die erste Lage 36a und die zweite Lage 36b sind an Stirnflächen entlang eines Bereichs 37a fest miteinander verbunden. Die zweite Lage 36b und die dritte Lage 36c sind ferner in einem zweiten Bereich 37b fest miteinander verbunden (vorzugsweise über das gleiche Verfahren wie die erste Lage 36a und die zweite Lage 36b). Die entsprechend hergestellte mehrlagige Platte, die zur Herstellung solcher Hohlzylinder 40 verwendet wird, kann insbesondere eine höhere Steifigkeit als eine einlagige Platte aufweisen. Darüber hinaus können auf diese Weise Hohlzylinder 40 beliebiger Länge hergestellt werden, ohne dass hierfür Platten verschiedener Dicken vorrätig gehalten werden müssen.

Soweit die vorgehende Beschreibung den Ausdruck "im Wesentlichen" verwendet, sind auch solche Ausführungsformen umfasst, in denen das jeweilige Merkmal vollständig oder komplett vorliegt. Die Wörter "Vielzahl" oder "mehrere" sind im Sinne von "mindestens zwei", d.h., zwei oder mehr, zu verstehen. Sofern konkrete Werte angegeben werden, umfassen diese vorzugsweise auch geringfügige Abweichungen von diesen Werten, wie etwa Abweichungen von +/- 10% oder +/- 5% des jeweiligen Werts. Einzelne Aspekte der Erfindung können eigenständige Erfindungen bilden und auch als solche beansprucht werden.

Die Erfindung betrifft insbesondere die folgenden Aspekte:
1. Rohrträger (10) zur Aufhängung oder Abstützung einer isolierten Rohrleitung, wobei der Rohrträger (10) aufweist:
   - einen Hohlzylinder (40) aus, vorzugsweise geschlossenzelligem, Weichschaum, wobei der Hohlzylinder (40) eine erste Stirnseite (41), eine zweite Stirnseite (42) und eine sich zwischen der ersten Stirnseite (41) und der zweiten Stirnseite (42) erstreckende Zylinderwand (43) aufweist, die sich entlang einer Längsachse (44) erstreckt, wobei der Hohlzylinder (40) entlang mindestens eines Schlitzes (45) geöffnet ist, der sich von der ersten Stirnseite (41) zur zweiten Stirnseite (42) erstreckt, wobei der Hohlzylinder (40) vorzugsweise mindestens 2 cm, mindestens 4 cm, oder mindestens 5 cm lang ist;
   - mindestens zwei Tragelemente (60), die in den Hohlzylinder (40) eingesetzt sind;
   - mindestens ein oder mehrere Lastverteilelemente (70), die im Bereich der Tragelemente (60) am Hohlzylinder befestigt sind;
   wobei die Zellen des Weichschaums vorzugsweise entlang einer äußeren Mantelfläche (47) des Hohlzylinders (40) freiliegen und/oder geöffnet sind.
2. Verfahren nach Aspekt 1, wobei das mindestens eine Lastverteilelement (70) auf der äußere Mantelfläche (47) des Hohlzylinders (40) haftet, vorzugsweise darauf geklebt ist.
3. Verfahren nach dem vorstehenden Aspekt, wobei mindestens ein Lastverteilelement (70) unmittelbar auf die freiliegenden und/oder geöffneten Zellen geklebt ist.
4. Rohrträger (10) nach einem der vorstehenden Aspekte, wobei der Schlitz (45) parallel zur Längsachse (44) verläuft.
5. Rohrträger (10) nach einem der vorstehenden Aspekte, wobei sich der Schlitz (45) von einer inneren Mantelfläche (46) bis zu einer äußeren Mantelfläche (47) des Hohlzylinders (40) erstreckt.
6. Rohrträger (10) nach einem der vorstehenden Aspekte, wobei sich maximal ein Schlitz (45) von der ersten Stirnseite (41) zur zweiten Stirnseite (42) und von der inneren Mantelfläche (46) zur äußeren Mantelfläche (47) erstreckt.
7. Rohrträger (10) nach einem der vorstehenden Aspekte, wobei der Hohlzylinder (40) in Umfangsrichtung aus einem einzelnen einheitlichen Segment besteht.
8. Rohrträger (10) nach einem der Aspekte 1 bis 6, wobei der Hohlzylinder (40) in Umfangsrichtung mehrere getrennte Segmente aufweist, beispielsweise 2 Segmente, vorzugsweise wobei die Segmente miteinander verklebt oder miteinander verklebbar sind.
9. Rohrträger (10) nach einem der vorstehenden Aspekte, wobei die Zylinderwand (43) eine innere Mantelfläche (46) aufweist, wobei die Zellen des Weichschaums entlang der inneren Mantelfläche (46) freiliegen und/oder geöffnet sind.
10. Rohrträger (10) nach einem der vorstehenden Aspekte, wobei der Hohlzylinder (40) entlang der ersten Stirnseite (41) und/oder entlang der zweiten Stirnseite (42) eine Außenhaut aufweist.
11. Rohrträger (10) nach einem der vorstehenden Aspekte, wobei die Zellen des Weichschaums entlang der ersten Stirnseite (41) und/oder entlang der zweiten Stirnseite (42) nicht freiliegen.
12. Rohrträger (10) nach einem der vorstehenden Aspekte, wobei die Tragelemente (60) jeweils in ein im Hohlzylinder (40) ausgebildetes Fenster (48) eingesetzt sind.
13. Rohrträger (10) nach dem vorgehenden Aspekt, wobei sich die Fenster (48) durch die Zylinderwand (43) hindurch erstrecken, vorzugsweise quer zur Längsrichtung.
14. Rohrträger (10) nach einem der beiden vorgehenden Aspekte, wobei die Fenster (48) als ringsegmentförmige Öffnungen ausgebildet sind.
15. Rohrträger (10) nach einem der vorstehenden Aspekte, wobei die Tragelemente (60) als Ringsegmente und/oder aus einem Hartschaum ausgebildet sind.
16. Rohrträger (10) nach einem der vorstehenden Aspekte, wobei das mindestens eine Lastverteilelement (70) oder die mehreren Lastverteilelemente (70) jeweils kreissegmentförmig ausgebildet sind, vorzugsweise mit einem Mittelpunktswinkel von mindestens 120°, mindestens 150°, mindestens 170° oder über 180°.
17. Rohrträger (10) nach einem der vorstehenden Aspekte, wobei mindestens zwei kreissegmentförmige Lastverteilelemente (70) auf die äußere Mantelfläche (47) des Hohlzylinders aufgebracht werden, wobei vorzugsweise jeweils ein Lastverteilelement (70) einem jeweiligen Tragelement (60) zugeordnet ist.
18. Rohrträger (10) nach einem der vorstehenden Aspekte, wobei eine äußere Oberfläche des Lastverteilelements (70) strukturiert oder aufgeraut ist, wobei auf die äußere Oberfläche des Lastverteilelements (70) vorzugsweise ein Strukturlack aufgebracht ist.
19. Rohrträger (10) nach dem vorstehenden Aspekt,
   wobei die äußere Oberfläche eine Rauheit Rₐ von mindestens 30 µm, mindestens 50 µm oder mindestens 70 µm aufweist.
20. Rohrträger (10) nach einem der vorstehenden Aspekte, wobei eine äußere Oberfläche eines jeweiligen Lastverteilelements (70) mindestens einen und vorzugsweise zwei Anschläge für die Rohrschelle (80) bereitstellt, um ein Verrutschen der Rohrschelle (80) in Richtung der Längsachse (44) zu begrenzen.
21. Rohrträger (10) nach dem vorstehenden Aspekt, wobei ein jeweiliger Anschlag durch mindestens eine oder mehrere Vorsprünge oder Noppen (72) gebildet ist, die entlang der äußeren Oberfläche des Lastverteilelements (70) ausgebildet sind.
22. Rohrträger (10) nach einem der vorstehenden Aspekte, wobei der Hohlzylinder (40) in Richtung der Längsachse (44) aus mehreren Lagen (36a, 36b, 36c) gebildet ist, wobei die einzelnen Lagen vorzugsweise hohlzylinderförmig sind.
23. Rohrträger (10) nach dem vorstehenden Aspekt, wobei die Lagen (36a, 36b, 36c) mittels Klebetechnik miteinander verbunden sind.
24. Rohrträger (10) nach einem der beiden vorstehenden Aspekte, wobei die Lagen (36a, 36b, 36c) unterschiedliche Wärmeleitkoeffizienten und/oder Schallabsorptionskoeffizienten haben.
25. Rohrträger (10) nach einem der vorstehenden Aspekte, wobei der Weichschaum weicher als das Material der Tragelemente ist, insbesondere weicher als ein Hartschaum der Tragelemente.
26. Rohrträger (10) nach einem der vorstehenden Aspekte, wobei die Tragelemente (60) aus einem Hartschaum ausgebildet sind, der eine Dichte von mindestens 100 kg/m³ hat.
27. Rohrträger (10) nach einem der vorstehenden Aspekte, wobei die Tragelemente (60) aus einem Hartschaum ausgebildet sind, der eine Dichte von mindestens 110 kg/m³ hat, wobei der Hartschaum vorzugsweise ein PET-Hartschaum ist.
28. Rohrträger (10) nach einem der vorstehenden Aspekte, wobei die Tragelemente (60) aus einem Hartschaum ausgebildet sind, der eine Dichte von mindestens 120 kg/m³, mindestens 150 kg/m³ oder mindestens 200 kg/m³ hat, wobei der Hartschaum vorzugsweise ein PET-Hartschaum ist.
29. Rohrträger (10) nach einem der vorstehenden Aspekte, wobei die Rohrschelle (80) eine Aufhängung (81) zur Befestigung an einer Decke oder eine Stütze zur Abstützung auf einem Boden aufweist.
30. Rohrträger (10) nach einem der vorstehenden Aspekte, wobei der Hohlzylinder (40) einen runden oder nicht-runden, insbesondere ovalen, quadratischen oder rechteckigen, Querschnitt aufweist.
31. Rohrträger (10) nach einem der vorstehenden Aspekte, wobei das eine oder die mehreren Lastverteilelemente (70) jeweils durch ein Krafverteilblech gebildet sind.
32. Rohrträger (10) nach einem der vorstehenden Aspekte, wobei die Länge des Hohlzylinders (40) weniger als 3 Mal, vorzugsweise weniger als 2 Mal die Länge der Rohrschelle beträgt.
33. Rohrträger (10) nach einem der vorstehenden Aspekte, wobei die Länge des Tragelements vorzugsweise weniger als 1/2 der Länge des Hohlzylinders beträgt.
34. Rohrträger (10) nach einem der vorstehenden Aspekte, wobei die Länge des Tragelements weniger als 4/10 der Länge des Hohlzylinders beträgt.
35. Rohrträger (10) nach einem der vorstehenden Aspekte, wobei die Länge des Tragelements weniger als 1/3 der Länge des Hohlzylinders beträgt.
36. Rohrträger (10) nach einem der vorstehenden Aspekte, wobei die Länge des Tragelements weniger als 1,5 Mal, vorzugsweise weniger als 1 Mal, die Länge der Rohrschelle beträgt.
37. Verfahren zur Herstellung eines Rohrträgers (10) zur Aufhängung oder Abstützung einer isolierten Rohrleitung, wobei das Verfahren die folgenden Schritte umfasst:
   - Bereitstellen (100) einer oder mehrerer Platten (30) aus, vorzugsweise geschlossenzelligem, Weichschaum mit einer ersten Hauptfläche (31), einer gegenüberliegenden zweiten Hauptfläche (32) und einer sich zwischen der ersten Hauptfläche (31) und der zweiten Hauptfläche (32) erstreckenden Plattendicke (33);
   - Herstellen (200) eines Hohlzylinders (40), wobei der Hohlzylinder (40) eine erste Stirnseite (41), eine zweite Stirnseite (42) und eine sich zwischen der ersten Stirnseite (41) und der zweiten Stirnseite (42) erstreckende Zylinderwand (43) aufweist, wobei der Hohlzylinder (40) entlang mindestens eines Schlitzes (45) geöffnet ist, der sich von der ersten Stirnseite (41) zur zweiten Stirnseite (42) erstreckt, wobei zur Herstellung des Hohlzylinders ein oder mehrere Hohlzylinder-Rohlinge (50) aus der einen oder den mehreren Platten (30) geschnitten werden;
   - Einsetzen (300) von mindestens zwei Tragelementen (60) in den Hohlzylinder (40);
   - Anbringen mindestens eines Lastverteilelements (70) oder mehrerer Lastverteilelemente (70) um den Hohlzylinder (40) im Bereich der Tragelemente (60).
38. Verfahren nach dem vorstehenden Aspekt, wobei der Rohrträger (10) ein Rohrträger nach einem der Aspekte 1 bis 31 ist.
39. Verfahren nach einem der beiden vorstehenden Aspekte,
   wobei die Hohlzylinder-Rohlinge als Hohlzylinder aus der einen oder den mehreren Platten geschnitten werden; oder
   wobei die Hohlzylinder-Rohlinge als Hohlzylindersegmente aus der einen oder den mehreren Platten geschnitten werden, wobei zwei oder mehr Hohlzylindersegmente zu einem Hohlzylinder zusammengesetzt und/oder miteinander verklebt werden.
40. Verfahren nach einem der drei vorstehenden Aspekte, wobei der eine oder die mehreren Hohlzylinder-Rohlinge (50) aus der Platte (30) ausgesägt, vorzugsweise mittels einer Drahtschneidmaschine, mittels einer Bandsäge, ausgestanzt und/oder ausgefräst werden, optional mittels CNC-Technik.
41. Verfahren nach einem der vorstehenden Aspekte, wobei die eine oder die mehreren Platten während des Schneidens entlang ihrer jeweiligen ersten und/oder entlang ihrer jeweiligen zweiten Hauptfläche abgestützt sind, vorzugsweise auf mindestens zwei Förderbändern.
42. Verfahren nach einem der vorstehenden Aspekte, wobei die eine oder die mehreren Platten während dem Schneiden horizontal oder im Wesentlichen horizontal angeordnet sind.
43. Verfahren nach einem der vorstehenden Aspekte, wobei ein Schneidmittel einer jeweiligen Schneidmaschine beim Schneiden in Richtung nach unten, vorzugsweise vertikal nach unten, durch die eine oder die mehreren Platten verläuft.
44. Verfahren nach einem der vorstehenden Aspekte, wobei aus einer einzelnen Platte (30) mehrere Hohlzylinder (40) oder mehrere Hohlzylinder-Rohlinge (50) geschnitten werden.
45. Verfahren nach einem der vorstehenden Aspekte, wobei die Plattendicke (33) mindestens 0,5 cm, mindestens 1 cm, mindestens 2 cm, vorzugsweise mindestens 4 cm, stärker bevorzugt mindestens 5 cm beträgt.
46. Verfahren nach einem der vorstehenden Aspekte, wobei die jeweilige Platte (30) eine Plattenbreite (34) und eine Plattentiefe (35) aufweist, wobei die Plattendicke (33) kleiner als die Plattenbreite (34) und die Plattentiefe (35) ist, wobei der Hohlzylinder (4) so aus der Platte (30) ausgeschnitten wird, dass die Längsachse (44) parallel zur Plattendicke (33) ist.
47. Verfahren nach einem der vorstehenden Aspekte, wobei die Tragelemente (60) jeweils in ein im Hohlzylinder (40) ausgebildetes Fenster (48) eingesetzt werden.
48. Verfahren nach dem vorgehenden Aspekt, wobei sich die Fenster (48) durch die Zylinderwand (43) hindurch erstrecken, vorzugsweise quer zur Längsrichtung.
49. Verfahren nach einem der beiden vorgehenden Aspekte, wobei der Hohlzylinder (40) in einer Halterung fixiert wird, um die Fenster (48) in den Hohlzylinder (40) einzubringen.
50. Verfahren nach einem der drei vorstehenden Aspekte, wobei die Fenster (48) als ringsegmentförmige Öffnungen ausgebildet sind.
51. Verfahren nach einem der vorstehenden Aspekte, wobei das mindestens eine Lastverteilelement (70) auf der äußeren Mantelfläche (47) des Hohlzylinders (40) befestigt, vorzugsweise aufgeklebt, wird.
52. Verfahren nach einem der vorstehenden Aspekte, wobei die Zellen des Weichschaums entlang der äußeren Mantelfläche (47) freiliegen und/oder geöffnet sind und das mindestens eine Lastverteilelement (70) unmittelbar auf die freiliegenden und/oder geöffneten Zellen geklebt wird.
53. Verfahren nach einem der vorstehenden Aspekte, wobei eine äußere Oberfläche des Lastverteilelements (70) strukturiert oder aufgeraut ist.
54. Verfahren nach dem vorstehenden Aspekt,
   wobei die äußere Oberfläche eine Rauheit Rₐ von mindestens 30 µm, mindestens 50 µm oder mindestens 70 µm aufweist.
55. Verfahren nach einem der vorstehenden Aspekte, wobei die Platte (30) vor und/oder bei Herstellung des Hohlzylinder-Rohlings (50) temperiert wird, insbesondere gekühlt, vorzugsweise in einer Kühlkammer.
56. Verfahren nach dem vorstehenden Aspekt, wobei die eine oder die mehreren Platten auf eine Temperatur unter 25 °C, stärker bevorzugt auf eine Temperatur unter 15 °C temperiert werden.
57. Verfahren nach einem der vorstehenden Aspekte, wobei mehre Hohlzylinder (40) oder Hohlzylinder-Rohlinge (50) aus der Platte (30) mittels einer Bandsäge ausgesägt werden, wobei die Platte (30) zur Stabilisierung entlang der ersten Hauptfläche (31) und/oder entlang der zweiten Hauptfläche (32) gehalten und/oder eingeklemmt wird.
58. Verfahren nach einem der vorstehenden Aspekte, wobei die Platte (30) in Richtung der Plattendicke (33) aus mehreren Lagen (36a, 36b, 36c) gebildet ist.
59. Verfahren nach dem vorstehenden Aspekt, wobei die verschiedenen Lagen (36a, 36b, 36c) jeweils aus einem Weichschaum, vorzugsweise aus einem geschlossenzelligen Weichschaum, ausgebildet sind.
60. Verfahren nach dem vorstehenden Aspekt, wobei die verschiedenen Lagen (36a, 36b, 36c) aus demselben Weichschaum ausgebildet sind.
61. Verfahren nach Aspekt 58 oder 59, wobei die Lagen (36a, 36b, 36c) aus Materialien mit unterschiedlichen Wärmeleitkoeffizienten und/oder Schallabsorptionskoeffizienten ausgebildet sind.
62. Verfahren nach einem der vier vorstehenden Aspekte, wobei die Lagen (36a, 36b, 36c) mittels Klebetechnik miteinander verbunden sind.
63. Verfahren nach einem der vorstehenden Aspekte, wobei aus der einen oder den mehreren Platten (30) Hohlzylinder-Rohlinge (50) verschiedener Innendurchmesser und/oder verschiedener Außendurchmesser geschnitten werden.
64. Verfahren nach einem der vorstehenden Aspekte, wobei der Hohlzylinder (40) einen runden oder nicht-runden, insbesondere ovalen, quadratischen oder rechteckigen, Querschnitt aufweist.
65. Verfahren nach einem der vorstehenden Aspekte, wobei das Verfahren ferner den Schritt umfasst:
   - Anbringen (500) einer Rohrschelle (80) um die mindestens eine oder die mehreren Lastverteilelemente (70).
66. Rohrträger (10) zur Aufhängung oder Abstützung einer isolierten Rohrleitung hergestellt nach dem Verfahren gemäß einem der Aspekte bis 37 bis 55.

## Patentansprüche

1. Rohrträger (10) zur Aufhängung oder Abstützung einer isolierten Rohrleitung, wobei der Rohrträger (10) aufweist:
- einen Hohlzylinder (40) aus Weichschaum, wobei der Hohlzylinder (40) eine erste Stirnseite (41), eine zweite Stirnseite (42) und eine sich zwischen der ersten Stirnseite (41) und der zweiten Stirnseite (42) erstreckende Zylinderwand (43) aufweist, die sich entlang einer Längsachse (44) erstreckt, wobei der Hohlzylinder (40) entlang mindestens eines Schlitzes (45) geöffnet ist, der sich von der ersten Stirnseite (41) zur zweiten Stirnseite (42) erstreckt;
- mindestens zwei Tragelemente (60), die in den Hohlzylinder (40) eingesetzt sind;
- mindestens ein oder mehrere Lastverteilelemente (70), die im Bereich der Tragelemente (60) am Hohlzylinder befestigt sind;
wobei die Zellen des Weichschaums entlang einer äußeren Mantelfläche (47) des Hohlzylinders (40) freiliegen und/oder geöffnet sind.

2. Rohrträger (10) nach Anspruch 1, wobei das mindestens eine Lastverteilelement (70) auf die äußere Mantelfläche (47) des Hohlzylinders (40) geklebt ist.

3. Rohrträger (10) nach Anspruch 2, wobei mindestens ein Lastverteilelement (70) unmittelbar auf die freiliegenden und/oder geöffneten Zellen geklebt ist.

4. Rohrträger (10) nach einem der vorstehenden Ansprüche,
wobei sich maximal ein Schlitz (45) von der ersten Stirnseite (41) zur zweiten Stirnseite (42) und von der inneren Mantelfläche (46) zur äußeren Mantelfläche (47) erstreckt; und/oder
wobei der Hohlzylinder (40) in Umfangsrichtung aus einem einzelnen einheitlichen Segment besteht.

5. Rohrträger (10) nach einem der vorstehenden Ansprüche,
wobei die Tragelemente (60) als Ringsegmente ausgebildet sind; und
wobei die Tragelemente (60) jeweils in ein im Hohlzylinder (40) ausgebildetes Fenster (48) eingesetzt sind, wobei die Fenster (48) ringsegmentförmig sind und sich durch die Zylinderwand (43) hindurch erstrecken.

6. Rohrträger (10) nach einem der vorstehenden Ansprüche, wobei eine äußere Oberfläche des Lastverteilelements (70) strukturiert oder aufgeraut ist.

7. Rohrträger (10) nach einem der vorstehenden Ansprüche, wobei die äußere Oberfläche eine Rauheit Rₐ von mindestens 30 µm, mindestens 50 µm oder mindestens 70 µm aufweist.

8. Rohrträger (10) nach einem der vorstehenden Ansprüche, wobei eine äußere Oberfläche eines jeweiligen Lastverteilelements (70) mindestens einen und vorzugsweise zwei Anschläge für die Rohrschelle (80) bereitstellt, um ein Verrutschen der Rohrschelle (80) in Richtung der Längsachse (44) zu begrenzen.

9. Rohrträger (10) nach einem der vorstehenden Ansprüche, wobei der Hohlzylinder (40) in Richtung der Längsachse (44) aus mehreren Lagen (36a, 36b, 36c) gebildet ist, wobei die einzelnen Lagen vorzugsweise hohlzylinderförmig sind, vorzugsweise wobei die Lagen (36a, 36b, 36c) mittels Klebetechnik miteinander verbunden sind.

10. Verfahren zur Herstellung eines Rohrträgers (10) zur Aufhängung oder Abstützung einer isolierten Rohrleitung, wobei das Verfahren die folgenden Schritte umfasst:
- Bereitstellen (100) einer oder mehrerer Platten (30) aus Weichschaum mit einer ersten Hauptfläche (31), einer gegenüberliegenden zweiten Hauptfläche (32) und einer sich zwischen der ersten Hauptfläche (31) und der zweiten Hauptfläche (32) erstreckenden Plattendicke (33);
- Herstellen (200) eines Hohlzylinders (40), wobei der Hohlzylinder (40) eine erste Stirnseite (41), eine zweite Stirnseite (42) und eine sich zwischen der ersten Stirnseite (41) und der zweiten Stirnseite (42) erstreckende Zylinderwand (43) aufweist, wobei der Hohlzylinder (40) entlang mindestens eines Schlitzes (45) geöffnet ist, der sich von der ersten Stirnseite (41) zur zweiten Stirnseite (42) erstreckt, wobei zur Herstellung des Hohlzylinders (40) ein oder mehrere Hohlzylinder-Rohlinge (50) aus der einen oder den mehreren Platten (30) geschnitten werden;
- Einsetzen (300) von mindestens zwei Tragelementen (60) in den Hohlzylinder (40);
- Anbringen mindestens eines Lastverteilelements (70) oder mehrerer Lastverteilelemente (70) um den Hohlzylinder (40) im Bereich der Tragelemente (60).

11. Verfahren nach Anspruch 10, wobei der eine oder die mehreren Hohlzylinder-Rohlinge (50) aus der Platte (30) ausgesägt, vorzugsweise mittels einer Bandsäge, ausgestanzt und/oder ausgefräst werden.

12. Verfahren nach Anspruch 10 oder 11, wobei aus einer einzelnen Platte (30) mehrere Hohlzylinder (40) oder mehrere Hohlzylinder-Rohlinge (50) geschnitten werden.

13. Verfahren nach einem der Ansprüche 10 bis 12,
wobei die jeweilige Platte (30) eine Plattenbreite (34) und eine Plattentiefe (35) aufweist, wobei die Plattendicke (33) kleiner als die Plattenbreite (34) und die Plattentiefe (35) ist, wobei der Hohlzylinder (4) so aus der Platte (3) ausgeschnitten wird, dass die Längsachse (44) parallel zur Plattendicke (33) ist; und
wobei die Plattendicke (33) zwischen 2 cm und 20 cm, vorzugsweise zwischen 4 cm und 20 cm beträgt.

14. Verfahren nach einem der Ansprüche 10 bis 13,
wobei die Platte (30) vor und/oder bei Herstellung des Hohlzylinder-Rohlings (50) gekühlt wird; und/oder
wobei mehrere Platten (30) vor Herstellung des Hohlzylinder-Rohlings (50) zu einem Block zusammengefügt werden.

15. Verfahren nach einem der Ansprüche 10 bis 14, wobei die Platte (30) in Richtung der Plattendicke (33) aus mehreren Lagen (36a, 36b, 36c) gebildet ist, wobei die Lagen (36a, 36b, 36c) vorzugsweise mittels Klebetechnik miteinander verbunden sind.
